# EUROPEAN PATENT APPLICATION

(11) **EP 1 025 809 A2**
(43) Date of publication of application: **09.08.2000**
(21) Application number: 00300774.7
(22) Date of filing: 01.02.2000
(51) Int. Cl.: A61C 1/00

(54) **Dental handpiece with protection against contamination**

(30) Priority: 01.02.1999 IL 12832599
(71) Applicant: Cohen, Yechiel, Carmiel 21611 (IL)
(72) Inventor: Cohen, Yechiel, Carmiel 21611 (IL)
(74) Representative: Simons, Elisabeth Anne

(57) **Abstract**

A dental handpiece includes a dental implement 3 at the front end 2a insertable into the mouth of a patient when performing a dental operation therein; and a fluid line connector 15 at the back end 2b of the handpiece for connection to a fluid supply line 15b supplying pressurized fluid to the dental implement; characterized in that the handpiece includes fluid control means 35 preventing the flow of fluid from the patient's mouth into the front end 2a of the dental handpiece and/or into the fluid supply line at the back end of the dental handpiece. In one embodiment, the dental implement 3 at the front end of the handpiece includes a rotatable dental tool, such as a burr, or drill, driven by a drive, such as an air turbine 6, coupled to the dental tool via a drive shaft, the drive being supplied by pressurized fluid via a fluid supply line connected to the back-end 2b of the handpiece.

## Description

The present relates to dental handpieces, and particularly to dental handpieces provided with protection against contamination.

Various types of dental handpieces are commonly used by dentists and dental technicians when performing dental operations in the mouth of a patient. Such dental handpieces commonly include a drive, generally an air turbine, which rotates a dental implement, such as a burr, drill, or a mandrel, within the patient's mouth. After the treatment of a patient, the dental handpiece has to be sterilized, generally by an autoclave, before it is used on another patient to prevent the spreading of diseases.

However, when a dental handpiece is used with one patient, fluids in the patient's mouth may be sucked back via the dental handpiece into the air or water supply lines supplying air or water to the dental handpiece. Such a suck-back of fluids into the fluid supply lines may result from various causes, including the continued rotation by inertia of the turbine after it has been turned-off, or by the return of the tubing to its normal size following its increase by the pressurized fluid. This suck back of fluids from the patient's mouth into the handpiece, and from there into the fluid lines, contaminates the handpiece and also the fluid lines. The handpieces can be conveniently sterilized, e.g., by autoclaving, but not so with respect to the fluid lines which may also be contaminated by this suck-back of fluids, thereby creating a very serious health hazard to subsequently treated patients.

Moreover, contamination of the handpiece increases wear and tear on the air turbine and the bearings in the handpiece, thereby decreasing the useful life of the handpieces as well as increasing the frequency they are required to be cleaned.

A broad object of embodiments of the present invention is to provide a dental handpiece having advantages in the above respects.

According to a broad aspect of the present invention, there is provided a dental handpiece comprising: a dental implement at the front end insertable into the mouth of a patient when performing a dental operation therein; and a fluid line connector at the back end of the hand piece for connection to a fluid supply line supplying pressurized fluid to the dental implement; characterized in that the handpiece includes fluid control means preventing the flow of fluid from the patient's mouth into the front end of the dental handpiece and / or into the fluid supply line at the back end of the dental handpiece.

The invention is particularly useful with respect to dental handpieces wherein the dental implement at the front end of the handpiece includes a rotatable dental tool, such as a burr, or drill, driven by a drive, such as an air turbine, coupled to the dental tool via a drive shaft, the drive being supplied by pressurized fluid via a fluid supply line connected to the back-end of the handpiece. The invention is therefore described below with respect to such applications.

Many embodiments of the invention are described below for purposes of example.

In one described embodiment, the flow control means includes a seal which is movable away from the drive shaft to produce a passageway permitting free rotation of the drive shaft when positive fluid pressure is applied to the drive to rotate the drive, but is movable towards the drive shaft upon the termination of the positive pressure to the drive to close the passageway and thereby to block the reverse flow of fluid from the patient's mouth into the handpiece by the rotational inertia of the drive.

Another embodiment is described below wherein the drive shaft includes turbine blades at the exit end of the drive shaft emerging from the front end of the handpiece and coupled to the dental tool so as to be rotated therewith, the turbine blades being oriented to produce a positive pressure directed outwardly through a clearance beteween the housing and the drive shaft to prevent fluid from the patient's mouth entering the handpiece via said clearance upon the termination of the flow of pressurized fluid to the drive.

Other embodiments are described below wherein the handpiece includes a one-way valve which is normally biased to a closed position to block the flow of fluid for rotating the drive in the absence of pressurized fluid supplied to the drive, but is urged to an open position to permit the flow of fluid for rotating the drive when pressurized fluid is applied to the drive.

Further embodiments are described below wherein the front end of the handpiece includes an air spray nozzle and a water spray nozzle supplied by pressurized air and water, respectively, via further water and air lines connected at the back end of the handpiece. In some of the latter embodiments, the front end of the handpiece includes a one-way valve for each of the nozzles permitting discharge from the respective nozzle into the patient's mouth, but blocking flow via the respective nozzle from the patient's mouth into the handpiece. In other embodiments, the back-end of the handpiece includes a first one-way valve from the water line to the water spray nozzle, and a second one-way valve from the air line to the air spray nozzle, each one-way valve permitting forward flow to the respective nozzle, but blocking reverse flow from the respective nozzle.

Still further embodiments are described wherein the back-end of the handpiece includes a one-way valve permitting flow of pressurized fluid to the drive in the handpiece upon the presence of pressurized fluid in the fluid supply line, but blocking the flow of fluid from the handpiece to the fluid supply line upon the absence of pressurized fluid in the fluid supply line.

Another embodiment is described wherein the back-end of the handpiece includes a common one-way valve for controlling the fluid supply line to the drive, the fluid exhaust line from the drive, the air supply line to the air spray nozzle, and the water supply line to the water spray nozzle.

A still further embodiment is described wherein the handpiece includes a fluid reservoir connected to the drive such that when pressurized fluid is supplied to the drive to drive same, the reservoir is charged with fluid; and when the pressurized fluid supply to the drive is terminated, the reservoir discharges its fluid into the drive to produce braking of the drive, thereby preventing suck-back of fluids by the rotational inertia of the drive.

A still further embodiment is described wherein the fluid supply line coupled to the handpiece includes a vent to the atmosphere, which vent is closed when pressurized fluid is supplied to the drive in the handpiece for driving same, but is automatically opened upon termination of the supply of pressurized fluid to the drive, thereby venting the drive to the atmosphere to prevent suck-back of fluids by the rotational inertia of the drive.

Finally, a still further embodiment is described wherein the supply of pressurized fluid to the drive is controlled by an electrical control system having an operator which, when operated, causes the fluid in the supply line to flow to the drive in one direction, and when the operator is released, reverses the flow of the fluid with respect to the drive for a short interval (e.g., a few seconds), and then terminates the flow of the fluid to the drive.

Further features and advantages of the invention will be apparent from the description below.

Preferred features of the present invention will now be described, purely by way of example, with reference to the accompanying drawings, in which:
FIG. 1 illustrates one form of dental handpiece constructed in accordance with the present invention;
FIG. 2 is a rear view of the dental handpiece of FIG. 1, particularly showing its fluid line connectors;
FIG. 3 is an enlarged sectional view illustrating the front end of the handpiece of FIG. 1 as modified in accordance with one embodiment of the present invention;
FIG. 3a is an enlarged fragmentary view of a portion of FIG. 3, showing the parts in the normal working mode when pressurized fluid is applied to the handpiece;
FIG. 3b is a view corresponding to that of FIG. 3a, but showing the parts in the non-working mode, when the supply of pressurized fluid to the handpiece has been terminated;
FIG. 3c is a fragmentary illustrating the seal with respect to the button in the dental handpiece of FIG. 3;
FIGS. 4, 4a, 4b and 4c are views corresponding to those of FIG. 3,, 3a, 3b and 3c, respectively, but illustrating another embodiment of the invention;
FIG. 5 is a view similar to that of FIGS. 3 and 4 but illustrating a further embodiment of the invention;
FIG. 5a is a sectional view along line A - A of FIG. 5;
FIG. 6 is a side elevational view illustrating another dental handpiece constructed in accordance with the present invention;
FIG. 6a is an enlarged sectional view along line A - A of FIG. 6, showing the parts in the working mode when pressurized fluid is applied to the handpiece;
FIG. 6b is a view corresponding to that of FIG. 6a but showing the parts in the non-working mode when the supply of pressurized fluid has been terminated;
FIG. 7 is a side elevational view illustrating a further dental handpiece constructed in accordance with the present invention;
FIG. 7a is a sectional view along line A - A of FIG. 7;
FIG. 8 is an enlarged sectional view of the back-end of a handpiece constructed in accordance with another embodiment of the present invention in which the water supply line is provided with a one-way valve;
FIG. 9 is a view corresponding to that of FIG. 8 but showing another one-way valve provided in the water supply line;
FIG. 10 is a side elevational view, partly in section, illustrating a dental handpiece constructed in accordance with a further embodiment of the invention, FIG. 10a being an enlarged sectional view of the sectioned portion of the dental handpiece of FIG. 10:
FIG. 11 is a side elevational view, partly in section, of another dental handpiece constructed in accordance with a further embodiment of the invention, FIG. 11a being an enlarged view of the sectioned portion of FIG. 11 showing the parts in the working mode, FIG. 11b being a view corresponding to that of FIG. 11a but showing the parts in the non-working mode, FIG. 11c being a section along line C - C of FIG. 11a and FIG. 11d being a section along line D-D of FIG. 11c;
FIG. 12 is a side elevational view, partly in section, illustrating a dental handpiece constructed on accordance with a further embodiment of the invention, FIG. 12a being an enlarged view of the sectioned portion of FIG. 12, FIG. 12b being a section along line B - B of FIG. 12a, and FIG. 12c being a section along line C - C of FIG. 12b;
FIG. 13 is a side elevational view, partly in section, of a dental handpiece constructed in accordance with a further embodiment of the invention, FIG. 13a being a schematical view along lines A - A of FIG. 13 showing the parts in the working mode, FIG. 13b being a sectional view along lines B - B of FIG. 13a, FIG. 13c being a section along line C - C of FIG. 13a, and FIG. 13d being a view corresponding to that of FIG. 13b but showing the parts in the working mode;
FIG. 14 is a side elevational view illustrating a dental handpiece constructed in accordance with a still further embodiment of the present invention, FIG. 14a being an enlarged view of the sectioned portion of FIG. 14 showing the parts in the working mode, and FIG. 14b being a corresponding view but showing the parts in the non-working mode;
FIG. 15 is a side elevational view, parted in section, illustrating a dental handpiece constructed in accordance with a still further embodiment of the invention, FIG. 15a being an enlarged view of the sectioned portion of FIG. 15 showing the parts in the working mode, FIG. 15b being a corresponding view as FIG. 15a but showing the parts in the non-working mode, and FIG. 15c showing one manner of installing the adapter in FIG. 15 in the dental armchair; and
FIG. 16 is a side elevational view illustrating a dental handpiece constructed in accordance with a further embodiment of the invention and controlled by an electrical control circuit, FIGS. 16a and 16b being graphs helpful in understanding the operation of the dental handpiece of FIG. 16.

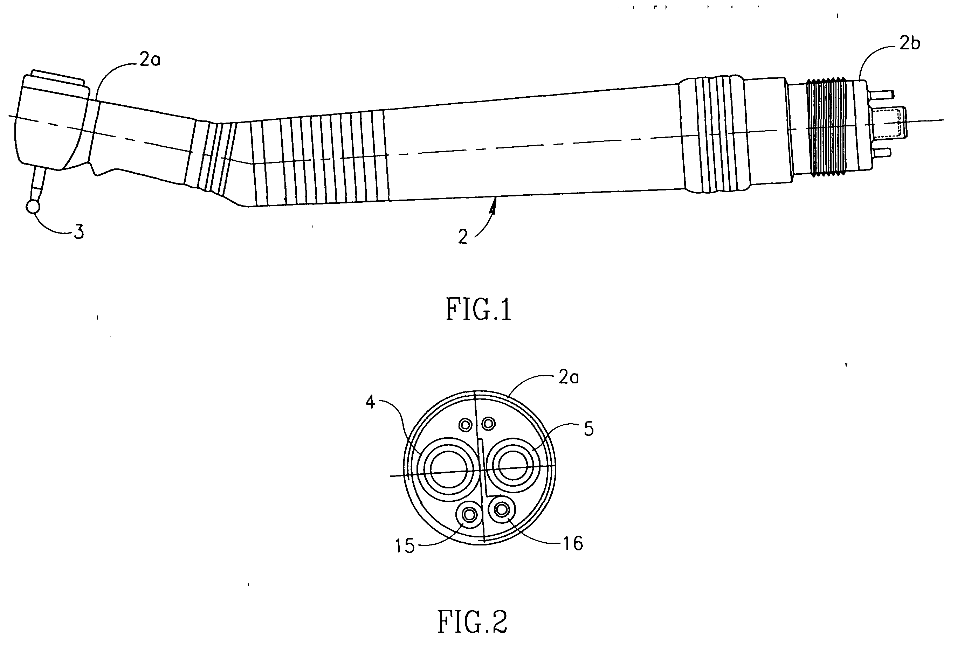

One form of dental handpiece constructed in accordance with the present invention is illustrated in FIGS. 1 and 2. The illustrated handpiece 2 includes an elongated housing 2 adapted to be conveniently grasped by the operator, and carrying a dental implement 3 at the front end 2a of the housing insertable into the mouth of the patient by the operator when performing a dental operation therein. The dental implement 3 illustrated for purposes of example is a burr or drill rotated at high speed by an air turbine within the housing 2 and powered by pressurized air supplied via an air supply line connected to a connector 4 at the back end 2b of housing 2. The air is exhausted from the turbine via an exhaust line connected to a connector 5 also at the back end of the housing.

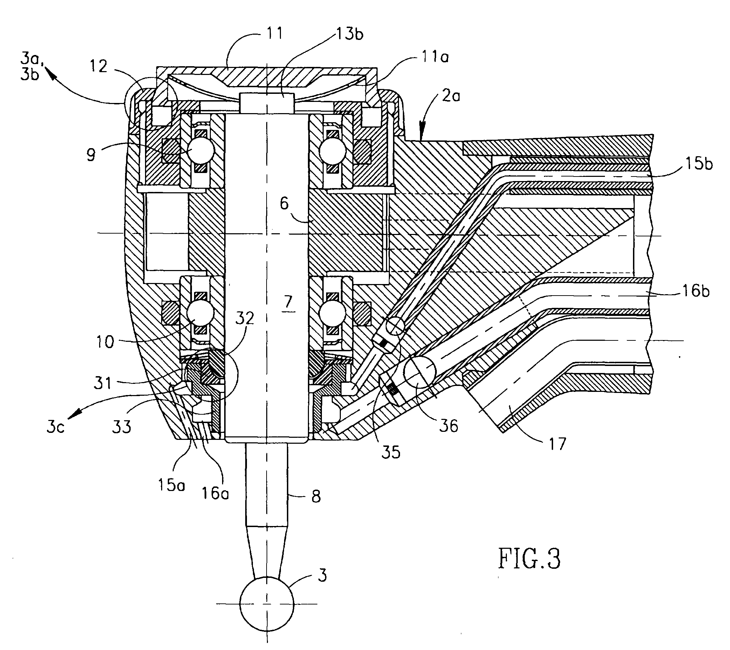

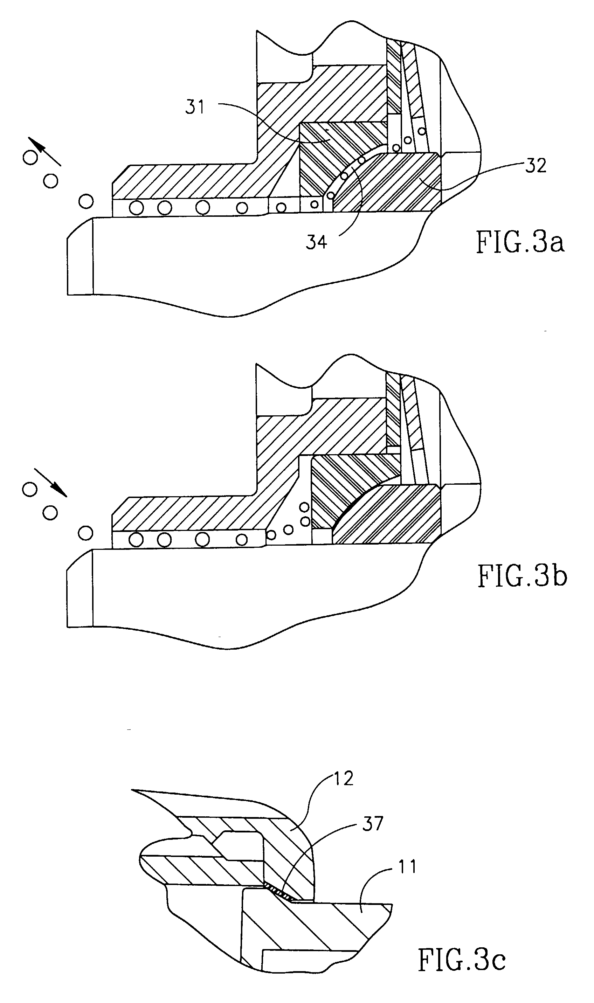

As shown in FIG. 3, the front end 2a of the housing includes an air turbine 6 formed with a plurality of blades impinged by compressed air flowing from the air drive connector 4 and exhausted via the air exhaust connector 5 at the back-end 2b of the housing. Turbine 6 is integrally formed with a sleeve 7 of tapered configuration serving as a hollow shaft for receiving the shaft 8 of the dental tool 3. The turbine 6, together with the tool 3 clamped to it by sleeve 7, are rotatably mounted within the front end 2a of the housing 2 by a pair of bearings 9, 10. The tool 3 is released from the housing by depressing a push button 11 movable within a collar 12 against the action of a spring 11a.

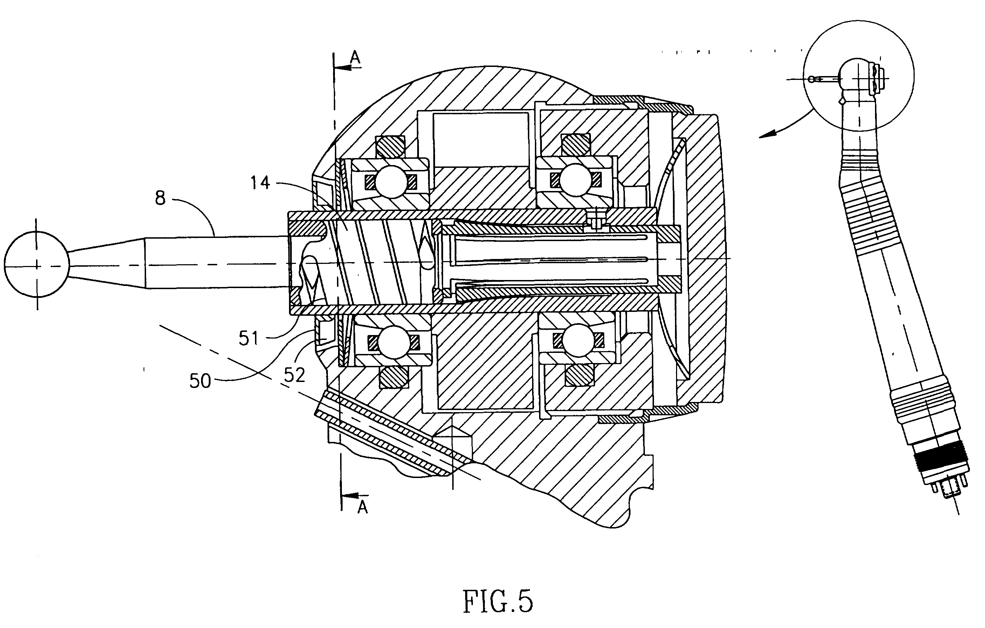

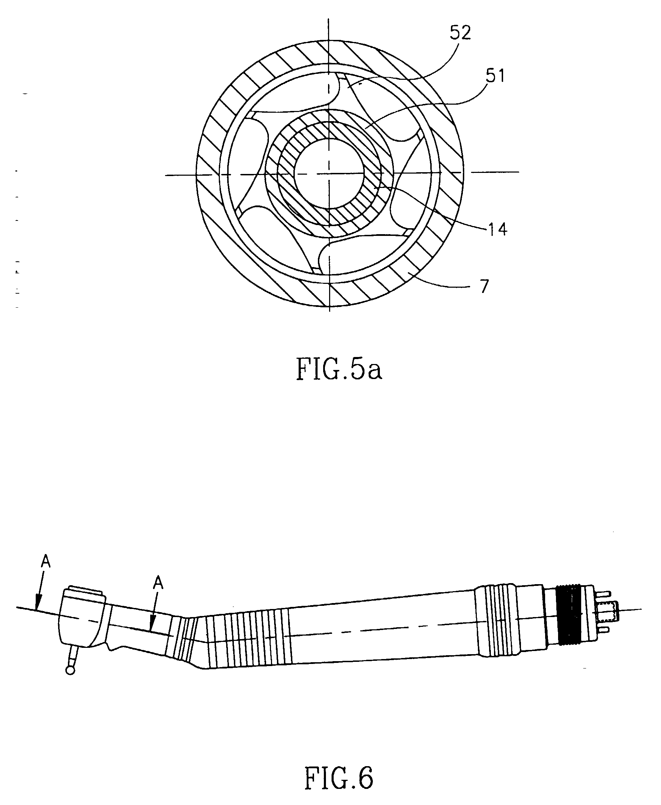

The front end 2a of the handpiece 2 is preferably of the construction described in my Israel Patent Application No. , (U.S. Serial No. 09/074,460), and is shown more particularly in FIG. 5. Thus, the tapered sleeve 7 internally formed with the turbine 6 receives a tapered collar assembly 13 having a coiled spring portion 14 adjacent its open end. Coiled spring 14 has a generally uniform outer diameter, while the other diameter of the tapered collar 13 decreases from the coiled spring towards the button 11. The collar assembly 13 is formed with three axial slits 13a equally spaced around its circumference, starting just beyond the coil spring 14 and extending nearly to its opposite end 13b adjacent the button 11. These slits permit the collar assembly to contract in order to firmly clamp the shaft 8 of the dental tool, or to expand in order to release the shaft upon depression of button 11.

The back end 2a of the dental hand piece housing 2, as illustrated in FIG. 2, further includes a spray air inlet connector 15, and a spray water inlet connector 16, communicating, respectively.

With an air spray nozzle 15a and a water spray nozzle 16a, (FIG. 3) at the front end of the housing and oriented towards the dental tool 3. The air spray nozzle 15a is supplied with pressurized air via a passageway 15b passing through the dental handpiece, and the water spray nozzle 16a is supplied with pressurized water via another passageway 16b passing through the dental handpiece. Also shown in FIG. 3 is a light guide conduit 17 for receiving an optical fiber in order to illuminate the working area in the patient's mouth.

Such dental handpieces, to the extent described above, are well known, and therefore further details of its construction and operation are not set forth herein.

According to the embodiment of the invention illustrated in FIG. 3, the front end of the housing 2 is provided with a sealing ring 31 which is movable with respect to a ring 32 fixed to the turbine sleeve 7 so as to rotate with the tool shaft 8, and a collar 33 through which the turbine sleeve 7, and the tool shaft 8 clamped to, project from the front end of the housing.

FIG. 3a illustrates the foregoing elements in the working mode of the handpiece when pressurized air is supplied to the turbine 6; and FIG. 3b illustrates the foregoing elements in the non-working mode when the supply of pressurized air is terminated and a negative pressure is applied by the turbine 6 as it continues to rotate under its own inertia.

As shown in FIG. 3a, during the working mode of operation of the handpiece, the positive pressure applied to the turbine also moves sealing ring 31 leftwardly towards the limiting shoulder 33a on collar 33, to thereby define a clearance 34 between sealing ring 31 and ring 32 fixed to the turbine sleeve 7 serving as the output shaft of the turbine 6. This produces an air bearing facilitating the rotation of the turbine sleeve 7 and the tool shaft 8 clamped to it. However, as shown in FIG. 3b, when the supply of pressurized air is terminated, the continued rotation of the turbine, by its own inertia, produces a negative pressure which moves sealing ring 31 into contact with ring 32, to close the clearance 34, and thereby to prevent the sucking-in of fluids from the patient's mouth into the interior of the dental implement.

FIG. 3 also illustrates means for blocking the entry of fluids from the patient's mouth into the dental handpiece via the air-spray nozzle 15a and the water spray nozzle 16a. For this purpose, the spray air passageway 15b for conducting air to the air spray nozzle 15a is provided with a one-way ball valve 35, and similarly the spray water passageway 16b is provided with a one-way ball valve 36. Both valves 35 and 36 are designed to permit the flow of air and water from their respective passageways 15b, 16b, to their respective nozzles 15a, 16a, but to block the flow in the reverse direction, e.g., from their respective nozzles 15a, 16a, to their respective passageways 15b, 16b.

FIG. 3c shows a further means for blocking the entry of fluids into the interior of housing 2 by the negative pressure produced by the continued rotation of the turbine 6 upon the termination of the supply of the air drive to the turbine. For this purpose, an annular seal 37 is provided on the inner surface of collar 12 engagable with button 11, thereby sealing the button 11 with respect to the collar 12.

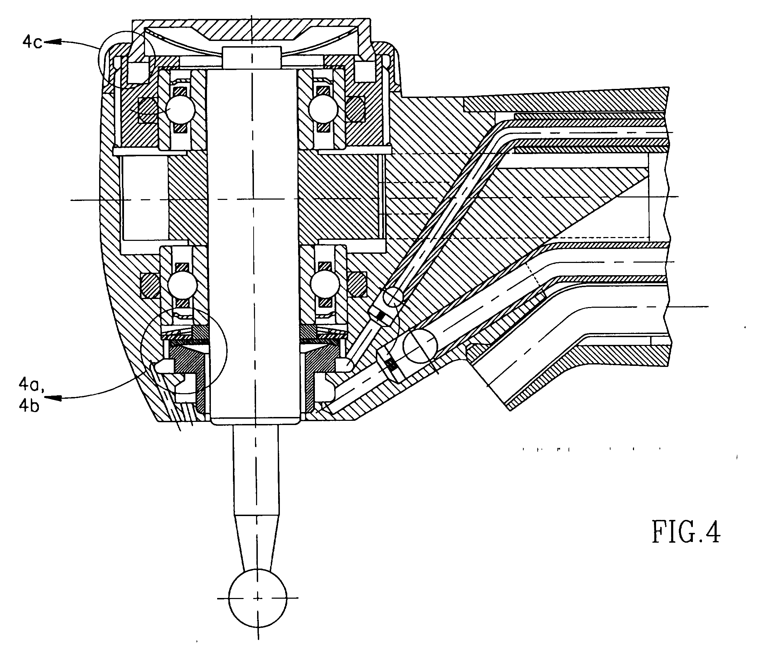

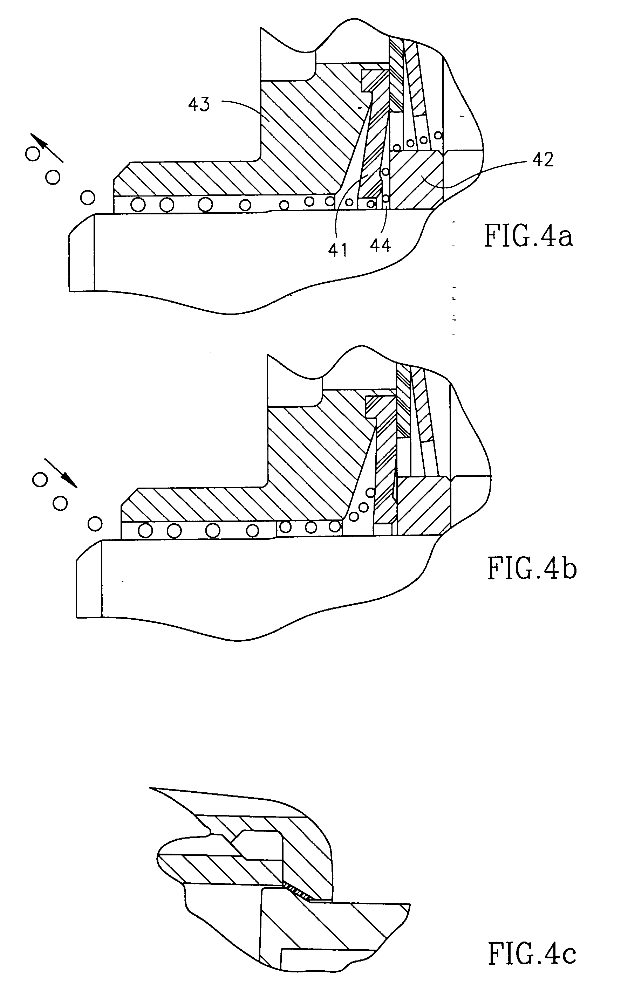

FIGS. 4 and 4a - 4c are corresponding views as FIGS. 3 and 3a - 3c, respectively, of a variation in the construction of the dental handpiece. This variation also includes a seal 41 movable with respect to a ring 42 fixed to the turbine sleeve 7 to rotate with it, and a collar 43 fixed with respect to the dental handpiece in order to open an air clearance 44 producing an air bearing between the two rings 31, 32 during the working mode of operation, when pressurized air is applied to drive the turbine, as shown in FIG. 4a. When the pressurized air drive is terminated and a vacuum is produced by the continued rotation of the air turbine, clearance 44 closes as shown in FIG. 4b. In the embodiment of FIGS. 4 and 4a - 4c, however, the movable seal 41 is of a flat construction, having its outer end fixed to the collar 43, and its inner end movable with respect to ring 42 in order to open and close the air clearance 44 in the manner described above.

Ring 32 fixed to the turbine sleeve 7 in FIG. 3, and the corresponding ring 42 in FIG. 4, are preferably made of a ceramic material; whereas the movable ring 31 in FIG. 3, and the corresponding ring 41 in FIG. 4, are preferably made of an elastomeric material.

In all other respects, the embodiment of FIG. 4 is constructed and operates in the same manner as described above with respect to the embodiment of FIG. 3, and therefore the corresponding parts have been numbered with the same reference numerals.

FIGS. 5 and 5a illustrate a dental handpiece similar to those described above, except that it includes different means for preventing the drawing in fluid from the patient's mouth by the continued rotation of the drive turbine 6 upon the termination of the air drive to the turbine. In this case, the suction is prevented by a secondary turbine, generally designated 50, including a collar 51 fixedly attached to the sleeve 7 of the main turbine 6, and having a plurality of blades 52 oriented to produce a positive pressure directed outwardly of the exit end of the turbine sleeve 7 by the continued rotation of the main turbine 6. This positive pressure produced by the auxiliary turbine 50 is directed outwardly of the handpiece, and thereby prevents the drawing-in of fluid from the patient's mouth by the continued rotation of the drive turbine 6 even after the air drive to it has been terminated.

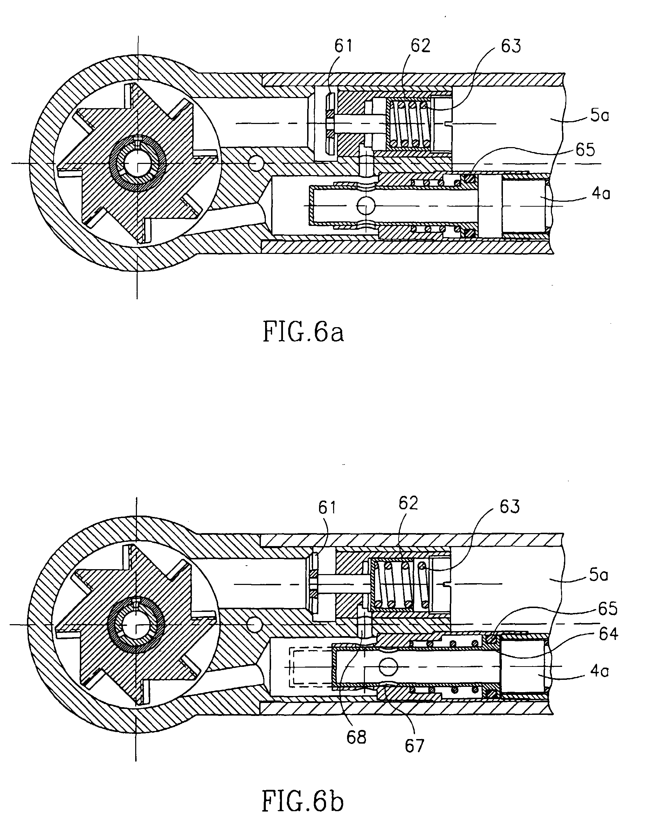

FIGS. 6, 6a and 6b illustrate a construction where the handpiece housing 2 includes a one-way valve in the air exhaust passageway 5a connecting the output end of the turbine 6 with the air exhaust connector 5 (FIG. 2). This one-way valve includes a valve member 61 coupled to a cylinder 62 which is urged by spring 63 to the closed position of the valve member (FIG 6b), but is automatically opened upon the application of pressurized air to the turbine 6. Thus, the air drive passageway 5a, connecting the air drive connector 4 to the turbine 6 includes a cylinder 64 urged to a normal position by a spring 65 and having an axial passageway 66 and a radial passageway 67 communicating, via another passageway 68, with cylinder 62 in the exhaust passageway 5a.

FIG. 6b illustrates the normally-closed position of valve member 61 within the exhaust passageway 5a, to which position it is biased by spring 63. However, when the pressurized air is supplied to the turbine air drive connector 4, cylinder 64 within the air drive passageway 4a, is moved axially against the force of spring 65, as shown in FIG. 6a, thereby aligning opening 67 with passageway 68, such that the turbine air drive pressure is applied via passageway 68 to cylinder 62 in the exhaust passageway 5a, to thereby move valve member 61 to its open position against the action of spring 63. However, as soon as the supply of pressurized air to the air drive passageway 4a is terminated, spring 63 automatically moves valve member 61 back to its normally-closed position within exhaust passageway 5a, as shown in FIG. 6b. This automatic closure of exhaust passageway 5a, upon the termination of the supply of pressurized air to the turbine 6 will brake the turbine to thereby prevent it from creating a vacuum within the handpiece tending to draw in fluids from the mouth of the patient.

In FIGS. 6, 6a and 6b, the one-way valve provided in the air exhaust passageway 5a of the turbine 6 is built into the back-end of the handpiece housing 2.

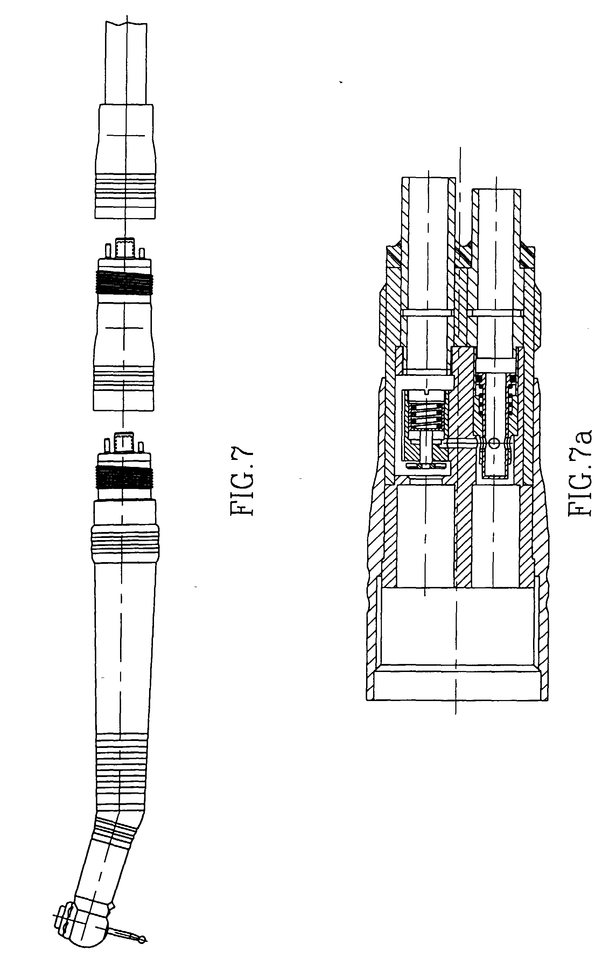

FIGS. 7 and 7a illustrate the same construction of a one-way valve included in the air exhaust passageway 5a but incorporated in a separate adapter attachment 70 to be attached to the back-end of the handpiece. By thus applying this one-way valve as a separate attachment, it can be used for adapting existing handpieces to provide the same function as described above.

The one-way valve illustrated in FIGS. 7 and 7a is otherwise the same as described with respect to FIGS. 6, 6a and 6b, and therefore the same reference numerals have been used to facilitate understanding.

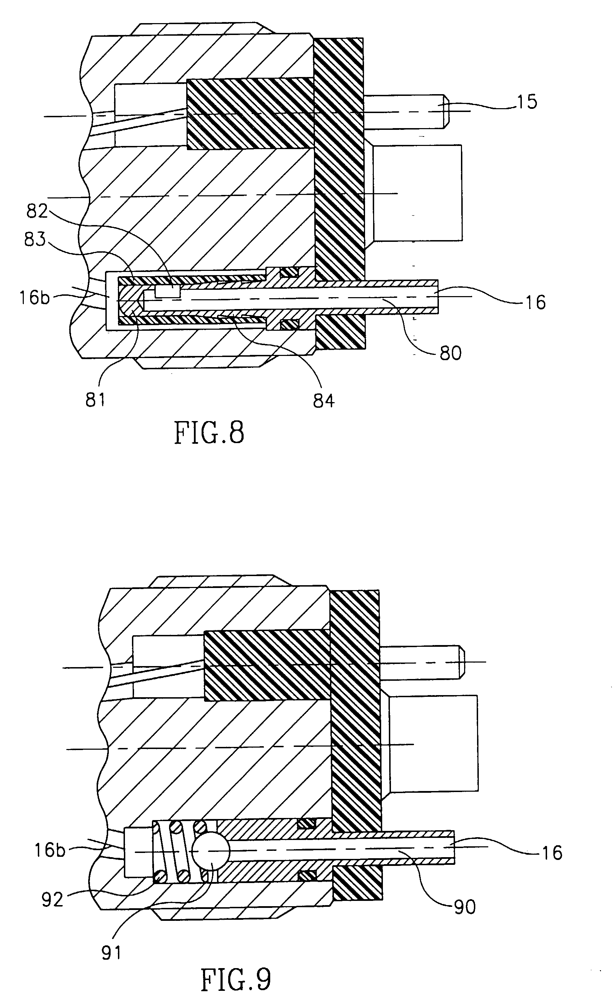

FIGS. 8 and 9 illustrate other variations, wherein one-way valves are provided in the spray water passageway 15b supplying water to the water spray nozzle 15a (FIG. 3) to permit pressurized water to flow outwardly through the spray nozzle, but blocking inward flow from the patient's mouth via the spray nozzle into the handpiece and the spray water supply line.

In FIG. 8, the one-way valve is applied to the spray water inlet connector 16 (FIG. 2) communicating, via passageway 16b with the water spray nozzle 16a. Thus, as shown in FIG. 8, the spray water inlet connector 16 is formed with an axial passageway 80 closed at the one end 81 but provided, adjacent to the closed end, with a radial passageway 82 covered by an elastomeric sleeve 83 retained on that end of the connector by teeth 84. It will be seen that when pressurized water is applied in the forward direction from the spray water supply line (not shown) attached to connector 16, the pressurized water will deform the elastomeric sleeve 83 to permit the flow of the water to go in the forward direction, via passageway 16b to the water spray nozzle 16a; but when the supply of spray water is terminated, the elastomeric sleeve 83 will block the flow of fluids in the reverse direction via opening 82 into the water supply line connected to connector 16.

FIG. 9 illustrates a similar arrangement, except the one-way valve, which closes the axial passageway therein designated 90, in the spray water connector 16, is closed by a ball 91 normally urged to a closed position by spring 92. Spring 92 allows ball 91 to open passageway 90 to permit water flow in the forward direction, but closes passage 90 to block flow in the reverse direction.

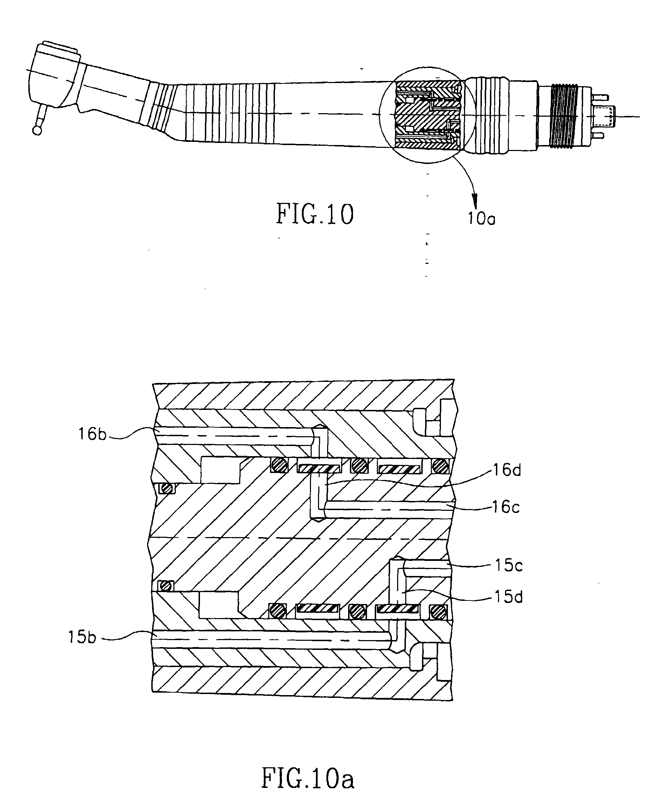

FIGS. 10 and 10a illustrate a construction wherein the back end 2b of the handpiece housing 2 is modified to incorporate a one-way valve in both the water supply passageway 16b to the water spray nozzle 16a, and also in the air supply passageway 15b to the air spray nozzle 15a.

For this purpose, an intermediate section 100 of the handpiece housing 2, adjacent to its back end 2b, is modified to include an additional spray air passageway 15c leading from the spray air inlet connector 15 to the main air passageway 15b within the handpiece, and an additional spray water passageway 16c leading from the spray water inlet connector 16 to the main spray water passageway 16b within the handpiece. The air passageway 15c is formed with a radial section 15d in alignment with the main air passageway 15c within the handpiece, but is covered by an elastomeric sleeve 101. Similarly, the water passageway 16c includes a radial section 16d in alignment with the main spray water passageway 16b in the handpiece, and is covered by a second elastomeric sleeve 102.

The two elastomeric sleeves 101 and 102 serve as one-way valves, in a similar manner as elastomeric sleeve 83 in FIG. 8, to permit forward flow of the spray air and the spray water to their respective nozzles 15a, 16a but block the reverse flow of fluids from their respective nozzles into their respective water and air passageways and supply lines.

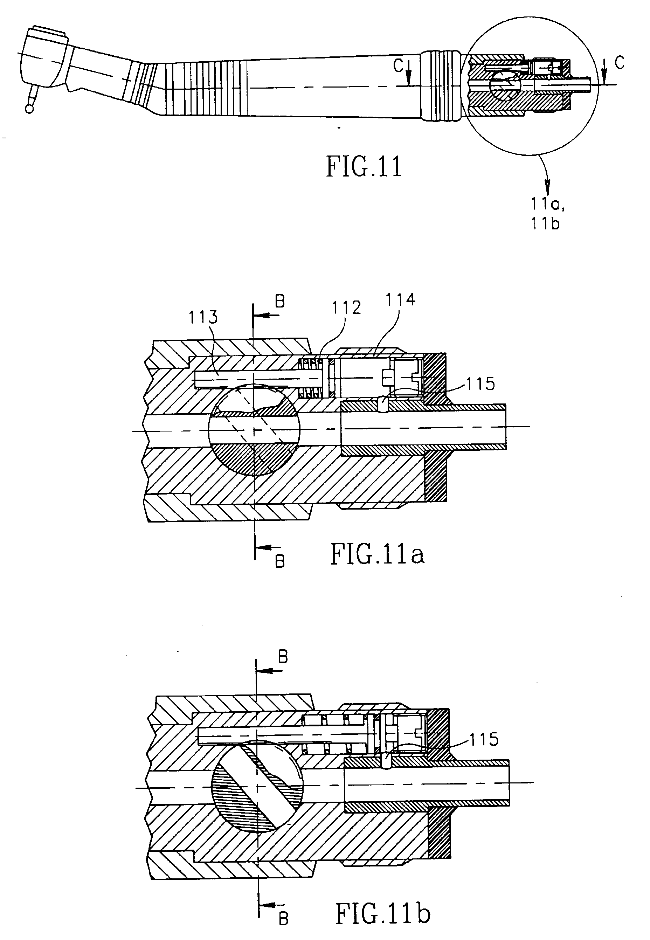

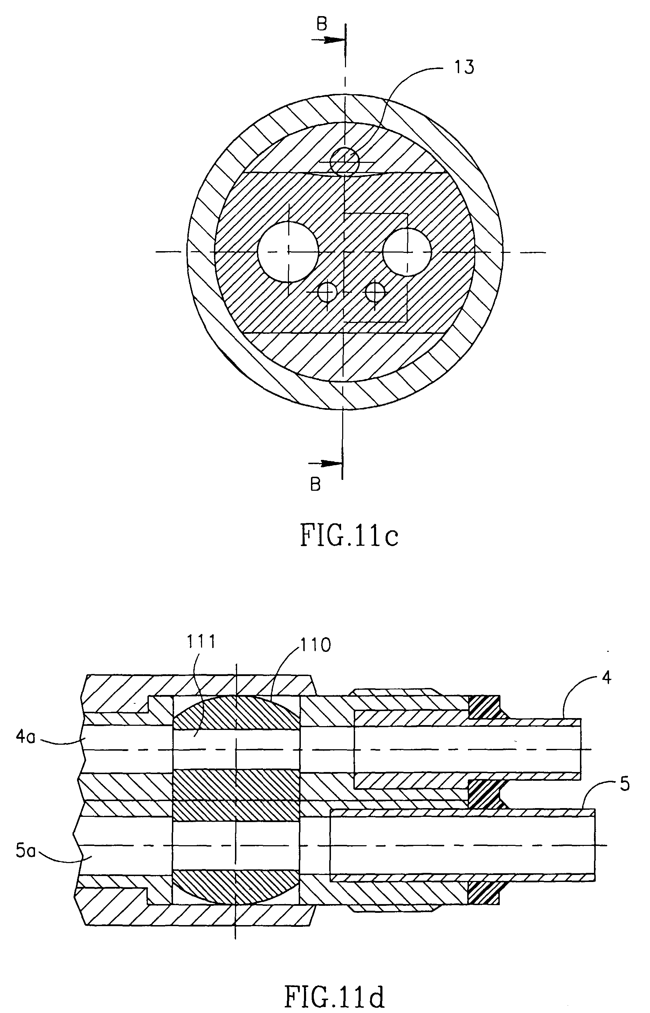

FIGS. 11 and 11a - 11d illustrate another arrangement, wherein a one-way valve is provided at the back end 2b of the handpiece housing 2, and cooperates with the turbine air drive connector 4 for supplying pressurized air to the turbine, and the air exhaust connector 5 for exhausting the air from the turbine.

Thus, as shown particularly in FIG. 11d, the back end 2b of the handpiece housing 2 is provided with a rotatable valve member 110, in the form of a truncated sphere having a first bore 111 in alignment with the air passageway 4a leading to the turbine 6, and a second bore 112 in alignment with the exhaust passageway 5a leading from the turbine. The rotatable valve member 110 is normally biased to a closed position (shown in FIG. 11b) with respect to both passageways by a spring-urged piston assembly including a spring 112 acting on a piston 113 movable within cylinder 114 and having a stem provided with teeth 113a meshing with teeth 110a on the outer surface of the rotatable valve member 110. Piston 113 is exposed, via a passageway 115, to the air supply pressure applied to the air drive connector 4 for driving the turbine 6, such that whenever this turbine air drive is applied, piston 113 is moved, against the action of its spring 112, to rotate valve member 110 to the open position shown in FIG. 11a. When the valve member 110 is rotated to its open position, it rotates both its bores 111 and 112 to be in alignment with the turbine air passageway 4a and exhaust passageway 5a, respectively, to supply pressurized air to the turbine and to exhaust the air from the turbine.

However, upon the termination of the application of the air drive to the turbine via the air drive connector 4, spring 112 moves piston 113 to the position illustrated in FIG. 11b, wherein the piston rotates valve member 110 to its normal closed position, thereby closing the air drive passageway 4a from its connector 4, and the exhaust passageway 5a to its connector 5.

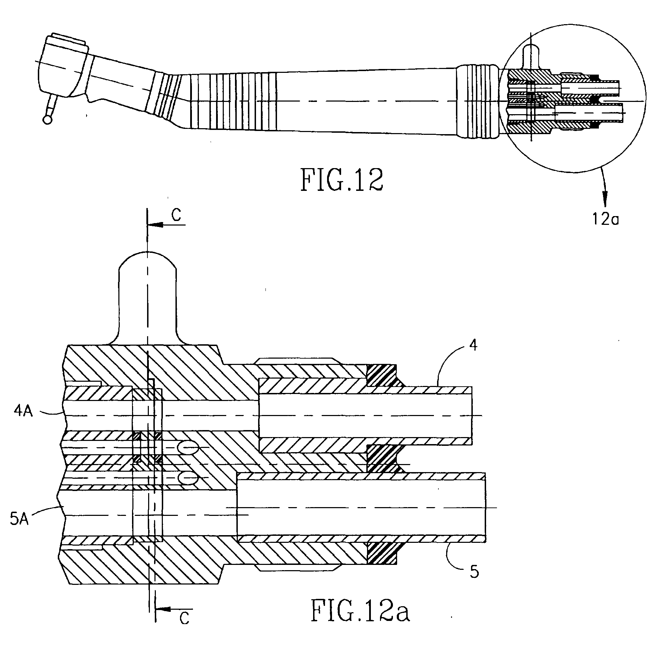

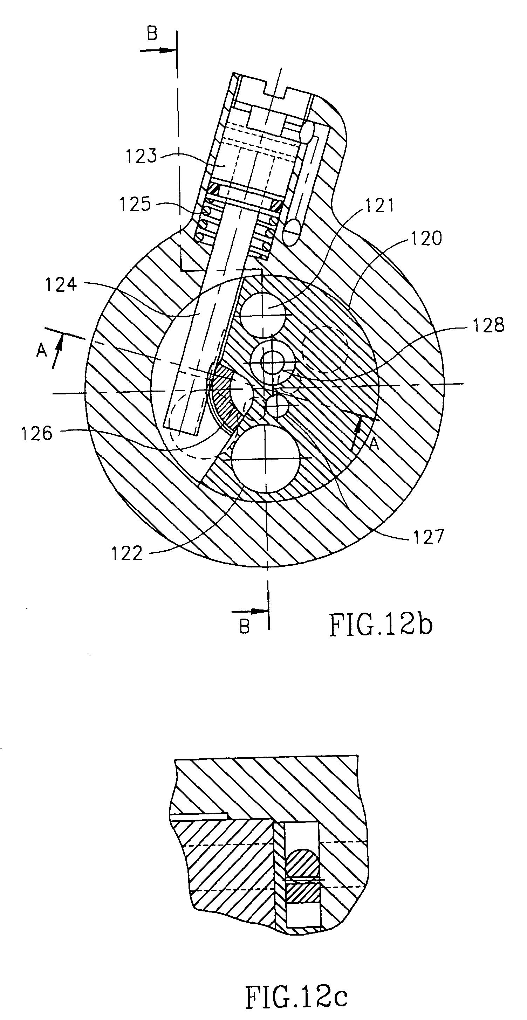

FIGS. 12 and 2a - 12c illustrate a construction similar to that of FIGS. 11 and 11a - 11d, except the rotatable valve member (110 in FIG. 11) is in the form of a disc 120, instead of a truncated sphere. Disc 120 is formed with two openings 121, 122, which control the flow of the air from the turbine air drive connector 4 to the air passageway 4a, and the flow of the turbine exhaust from the exhaust passageway 5a to the exhaust connector 5 in the same manner as described above in FIG. 11. Valve disc 120 is also controlled by a piston assembly 123 having a piston stem 124 urged by spring 125 to the closed condition of the valve disc, and actuated to-move the valve disc to its open position when pressurized air is applied to the turbine during the working condition of the handpiece. In this case, however, teeth 124a of piston stem 124 mesh with teeth on a gear wheel 126 fixed to the valve disc 120 to rotate the valve disc to its opened / closed positions.

FIG. 12b illustrates the position of the above element in the non-working mode, when pressurized air is not supplied via the turbine air inlet connector 4 and passageway 4a to the turbine 6. In this non-working condition of the handpiece, spring 125 urges piston 123 in the direction wherein its piston stem 124 rotates valve disc 120 to mis-aligned its openings 121, 122, with respect to the turbine air passageway 4a and exhaust passageway 5a within the handpiece.

However, when pressurized air is applied to the turbine air drive connector 4, the pressurized air is also applied to one face of piston 123, moving the piston (upwardly, FIG. 12b), causing its stem 124 to rotate valve disc 120 (clockwise), such as to align its openings 121 and 122 with the air drive passageway 4a and exhaust passageway 5a, respectively, whereby the pressurized air rotates the turbine. Whenever this pressurized air is terminated, spring 125 returns piston 123 to its normal condition, causing its stem 124 to rotate valve disc 120 counter-clockwise to its original position, wherein it closes the passage of the air from the turbine air drive connector 4 to its passageway 4a, and also closes the passageway for the exhaust from the exhaust passageway 5a to the exhaust connector 5, thereby braking the turbine, and also blocking the passage of any fluids from the patient's mouth to either the air line applied to connector 4, or exhaust line applied to connector 5.

As shown particularly in FIG. 12b, valve disc 120 is formed with two further openings 127, 128, for controlling the flow with respect to the spray air inlet nozzle 15a, and the spray water inlet nozzle 16a. When the valve disc 120 is in the working mode, opening 127 is aligned with the spray air passageway 15b communicating with the spray air nozzle 15a; and similarly opening 128 is aligned with the spray water passageway 16b communicating with the spray water nozzle 16a. However, when valve disc 120 is in its non-working mode (i.e., in its normal condition, or whenever the turbine air drive is interrupted), the two openings 127 and 128 are not aligned with their respective passageways, thereby blocking the inletting of fluids from the patient's mouth via their respective nozzles into their respective air and water lines.

It will be appreciated that the rotatable valve 110 in the embodiment of FIG. 11 could be similarly provided with separate bores for controlling the flow of the spray air and the spray water from or to their respective nozzles in the same manner as described above with respect to FIG. 12.

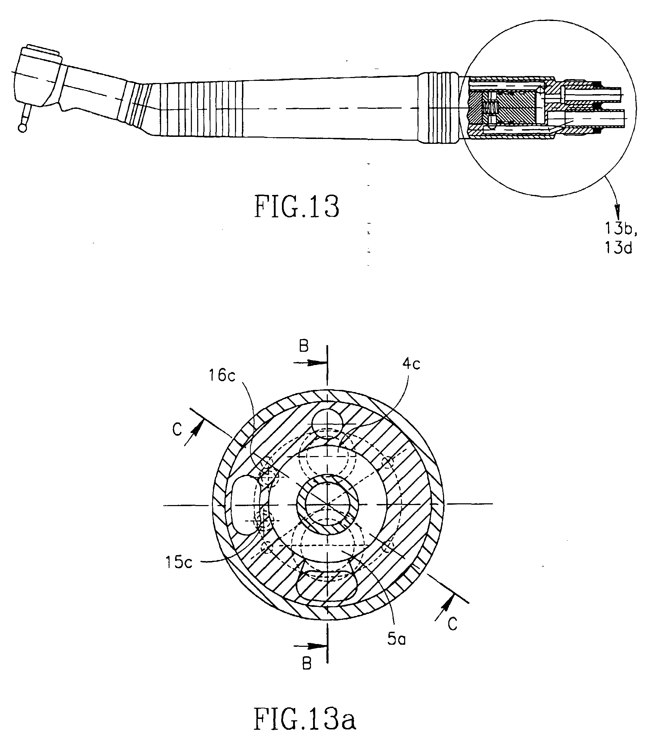

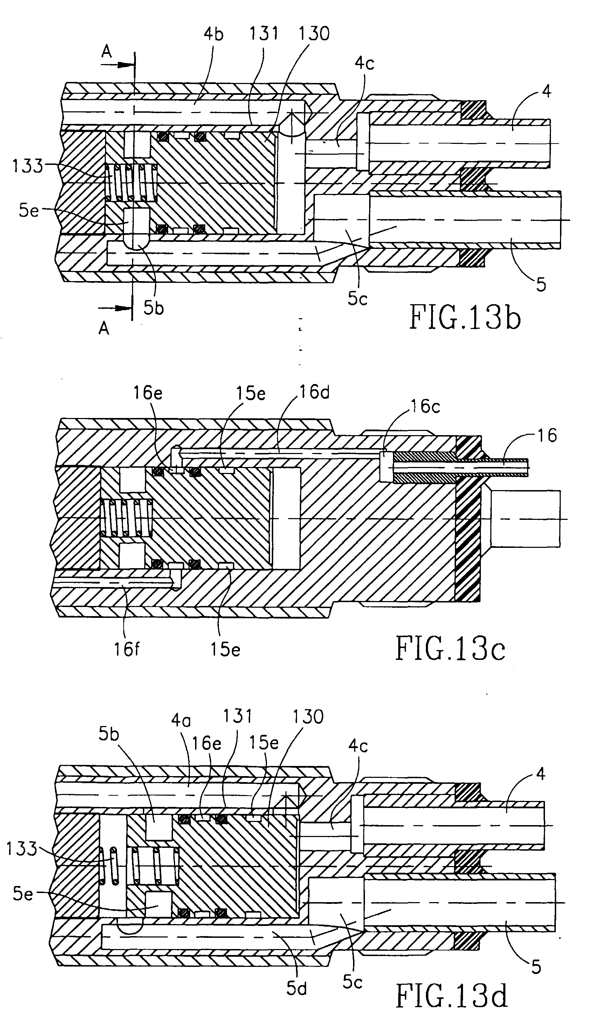

FIGS. 13 and 13a - 13b illustrate an arrangement similar to those of FIGS. 11, 12 and 13, except here the movable valve member is in the form of an axially-movable piston, generally designated 130, which moves within a cylinder 131 towards and away from an end wall 132. The piston is urged towards end wall 132 by a spring 133, to block the flow to and from the connectors 4, 5, 15 and 16 in the normal or non-working mode of the handpiece, when the turbine air drive pressure is not present at connector 4. However, when the turbine air drive pressure is applied to connector 4, the piston 130 is moved away from end wall 132, as shown in FIG. 13d, to permit communication between the four connectors 4, 5, 15 and 16, and their respective passageways.

Thus, the turbine air driver circuit from connector 4 to the turbine 6 includes passageways 4b and 4c (FIG. 13b), which passageway is interrupted in the non-working mode of the handpiece (FIG. 13b).

The circuit from the turbine air exhaust connector 5 includes passageway 5c joined to passageway 5b and communicating with an angular groove in the outer surface of piston 130 in the working mode of the handpiece as shown in FIG. 13b, which passageway communicates with the turbine 6 in the working mode of the handpiece.

As shown in FIG. 13c, the spray water inlet connector 16 communicates with the spray water nozzle 16a via passageway 16c, passageway 16d extending axially of the handpiece, angular groove 16e formed in the outer surface of piston 130, and axial passageway 16f also communicating with angular groove 16e.

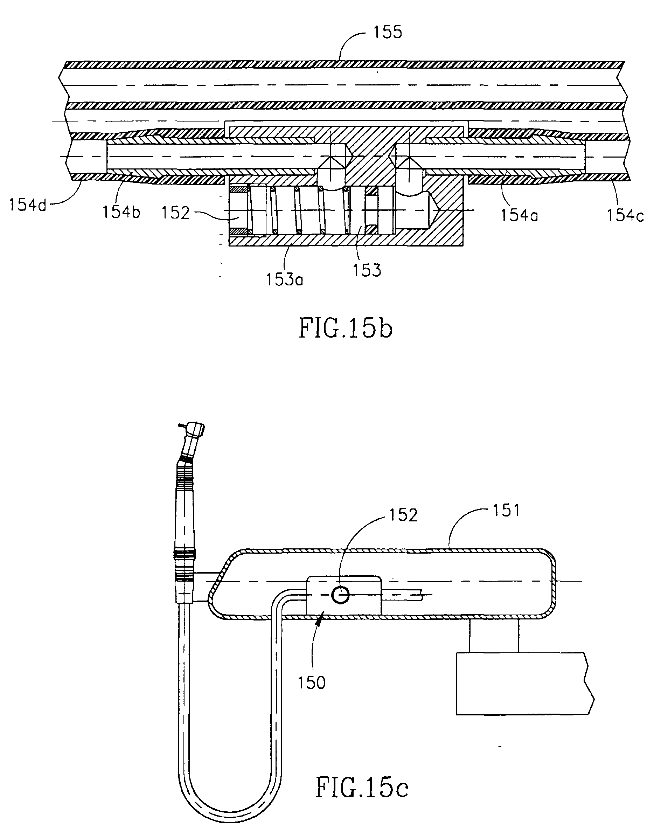

The spray air connector 15 communicates with its spray air nozzle 15a by similar arrangement of passageways, FIG. 13c illustrating the angular groove passageway in FIG. 15e, corresponding to the angular groove passageway 16e for the spray water nozzle, formed in the outer surface of the piston 130.

FIG. 13d illustrates the normal condition of the handpiece 2 when pressurized air is not applied to the turbine air drive connector 4. In this case, spring 131 urges piston 130 against end wall 133, thereby closing all the above-described passageways 4b, 5b, 15c, 16c to their respective connectors 4, 5, 15, 16.

When pressurized air is applied to the turbine air inlet connector 4, the pressurized air moves piston 130 to the position illustrated in FIG. 13b. It will be seen that when the piston is so positioned, all the foregoing passageways are open, such that pressurized air is applied to the turbine 6 via the turbine air inlet connector 4 and its passageways 4a and 4c; the turbine air exhaust line is connected to its connector 5 via its passageways 5b - 5e; the spray air inlet connector 15 is connected to the spray air nozzle 15a via its passageways 15c and 15e; and the spray water inlet connector 16 is connected to the spray water nozzle 16a via its passageways 16c and 16e. It will also be seen that, as soon as the pressurized air is terminated at the turbine air inlet connector 4, piston 130 returns to its normal position, shown in FIG. 13c, re-closing all the foregoing passageways.

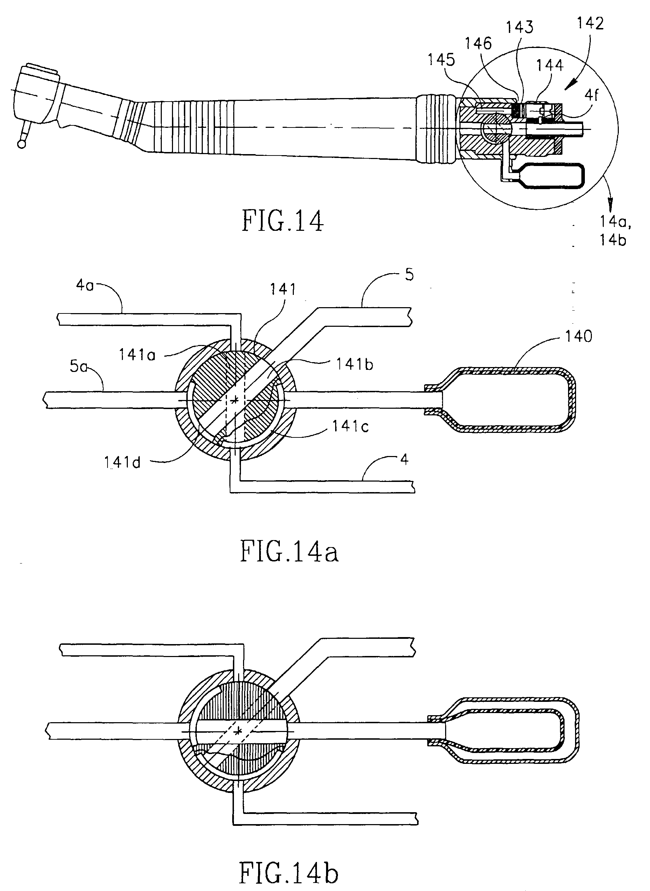

FIGS. 14, 14a and 14b illustrates a variation wherein the back end of the handpiece 2 is provided with a reservoir, generally designated 140, adapted to be pressurized by the turbine air drive pressure such that when that pressure is terminated, the reservoir discharges its pressurized air in the reverse direction to the turbine 6, thereby braking the turbine. The charging and discharging of reservoir 140 are controlled by a rotatable valve member 141.

Rotatable valve member 141 has two through-going bores 141a and 141b, and two arcuate grooves 141c, 141d. in the working mode (FIG. 14a), bore 141a connects the turbine air drive connector 4 to passageway 4a leading to the turbine 6; and bore 141b, including its arcuate groove 141d, connects the exhaust passageway 5a to the exhaust connector 5. In the working mode, the turbine air drive connector 4 is also connected via arcuate groove 141c to the reservoir 140.

In the normal, non-working mode as shown in FIG. 14b, all the foregoing connections are interrupted, except the reservoir 140 is connected via bore 141b to the exhaust passageway 4b to apply a reverse flow of the air to that passageway, thereby breaking the rotation of the turbine.

The rotatable valve member 141 is controlled by the turbine air drive, via a piston assembly 142, in the same manner as described above with respect to FIG. 11. Thus, the piston assembly 142 includes a piston 143 movable within a cylinder 144 and having a stem 145 coupled to the rotatable valve member 141 to rotate the valve member to either its non-working position illustrated in FIG. 14b, or to its working position illustrated in FIG. 14a. Piston 143 is urged by spring 146 to the non-working position of the valve member (FIG. 14a), but is moved by the turbine air drive, when applied to its connector 4, via a passageway 4f from connector 4 leading into cylinder 144.

FIG. 14a illustrates the working mode of operation of the handpiece, wherein the turbine air drive connector 4 is supplied with air pressure to drive the turbine 6. This air pressure is also applied, via groove 141c, to the reservoir 140 to pressurize the reservoir. The exhaust passageway 5a is connected to the exhaust connector 5 by groove 141d and bore 141b.

When the turbine air drive pressure is terminated, spring 146 in the cylinder 144 move piston 143 (leftwardly, FIG. 14) to thereby rotate valve member 141 to the position illustrated in FIG. 14b. In this position of valve member 141, its passageway 141a is interrupted, and the pressurized reservoir 140 becomes aligned with the exhaust passageway 5a leading to the turbine exhaust, via bore 141b, to apply a reverse pressure to the turbine exhaust, thereby braking the rotation of the turbine.

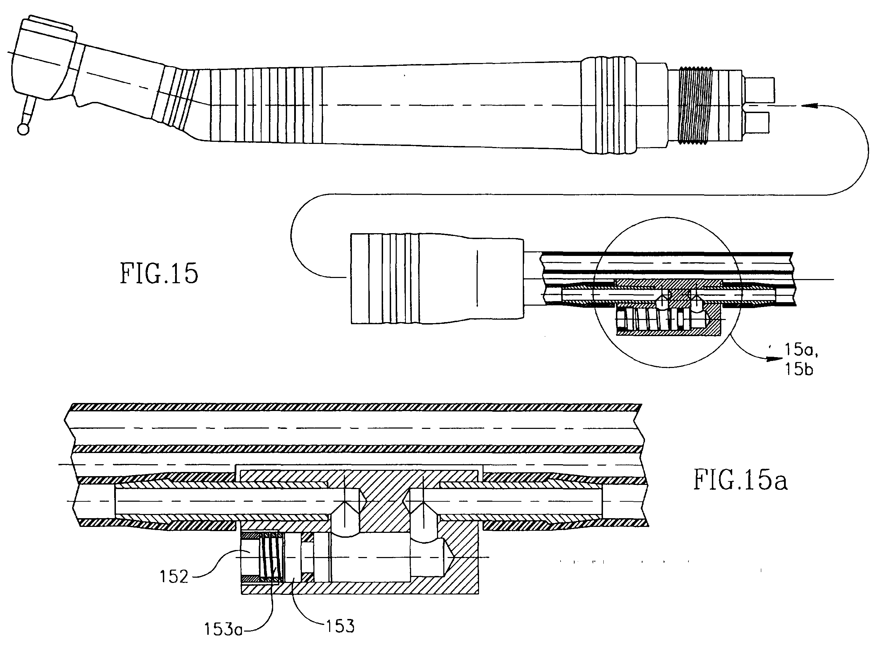

FIG. 15 illustrates a construction wherein the back end of the handpiece 2 includes a vent from the turbine inlet to the atmosphere, which vent is closed when pressurized air is supplied to the turbine 6 to rotate it, but is automatically opened when the supply of the pressurized air to the turbine is terminated. Thus, any suction produced by the continued rotation of the turbine will be dissipated to the atmosphere, and will not tend to draw in to the handpiece liquids from the patient's mouth.

FIG. 15c illustrates the vent as being incorporated in a fitting, generally designated 150, that may be attached to the dental armchair 151. Fitting 150 is formed with a vent 152 leading to the atmosphere, which vent is normally opened by a piston 153 urged to the open position by a spring 153a (FIG. 15b).

Fitting 150 includes two connectors 154a and 154b, each adapted to receive a tube 154c, 154d, respectively, to be connected, via the controlled vent 152 to the air drive connector 4 of the handpiece 2 for driving the turbine 6. The turbine air exhaust connector 5 may also be connected by a tube 155 passing through fitting 150.

FIG. 15b illustrates the non-working mode of operation of handpiece 2, wherein it will be seen that spring 153a urges piston 153 rightwardly, to block the communication between connectors 154a and 154b of the fitting 150, and also to connect connector 154d to the atmosphere via vent opening 152. Accordingly, in this non-working condition of the handpiece, the turbine 6 will be vented to the atmosphere.

When pressurized air is applied to drive the turbine, via line 154c, this pressurized air moves piston 153 leftwardly to the position illustrated in FIG. 15a wherein it closes vent 152 and also establishes communication directly between the two connectors 154a and 154b, thereby applying the air drive via tube 154d and connector 4 to drive the turbine.

Whenever the air drive pressure is terminated, piston 153 immediately moves back to the position illustrated in FIG. 15b under the influence of spring 153a, to interrupt the communication between the air drive applied via line 154, and to shunt the turbine to the atmosphere via shunt opening 152. Accordingly, when the air drive to turbine is terminated, the shunt is opened, so that any negative pressure produced by the continued rotation of the turbine will be dissipated to the atmosphere, and will not draw in fluids from the patient's mouth.

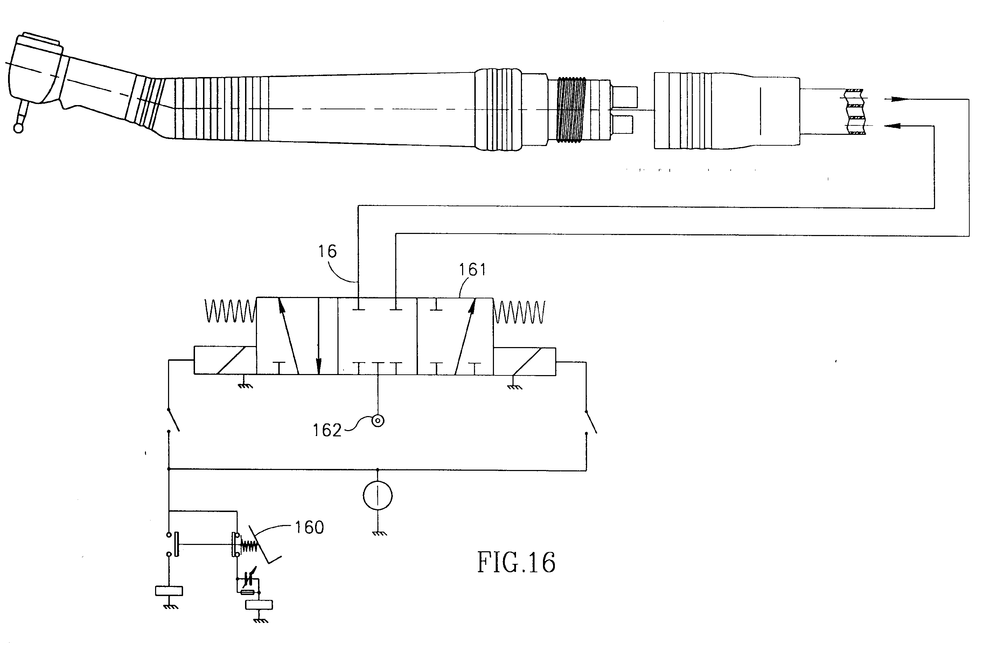

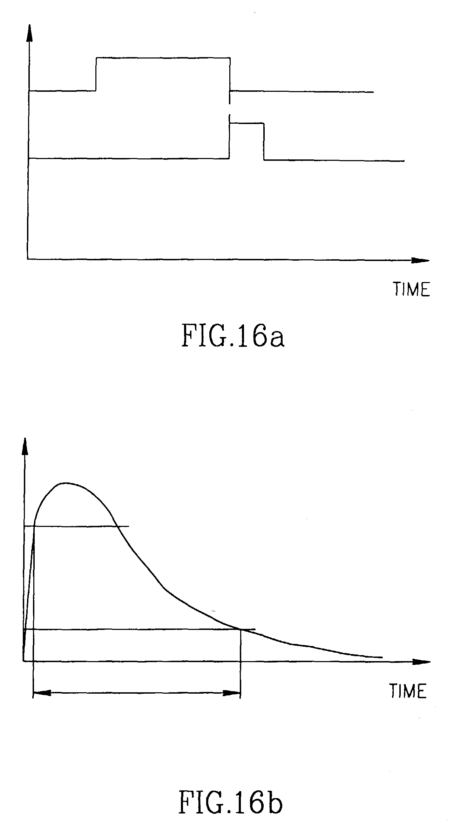

FIG. 16 illustrates an electrical control system which may be included with the handpiece 2 for automatically controlling the operation of the handpiece in order to block the suction into the handpiece of fluids from the patient's mouth when the handpiece is turned off. The electrical circuit illustrated in FIG. 16 is controlled by an operator 160, e.g., a conventional foot control device, such that when it is operated, it causes the air drive to be applied in the direction of driving the turbine, and when the operate is released, the direction of the air drive is automatically reversed for a short interval, and then terminated.

Thus, as shown in FIG. 16, the foot control operator 160, when operated, closes a relay RL-1, and opens a relay RL-2. These relays control a hydraulic valve 161 having an inlet 162 connected to the air drive, a first outlet 164 connected to the turbine air drive connector 4 of the handpiece, and a second outlet 165 connected to the turbine air exhaust connector 5.

When the foot control operator 160 is not depressed, relay RL-1 is opened, and relay RL-2 is closed. In such case, the air pressure at the valve inlet is applied to neither of its outlets 164, 165. When the foot control operator 160 is depressed to drive the turbine within the handpiece 2, relay RL₁ is closed, and relay RL₂ is open. Valve 161 is thus controlled to apply the air drive pressure from inlet 162 to outlet 164 connected to the turbine air drive connector 4 for driving the turbine. The turbine air exhaust connector 5 is connected via line 165 to the atmosphere.

When the foot control operator 160 is released to terminate the drive of the turbine, relay RL-1 is opened and relay RL-2 is closed, for a short interval (e.g., a few seconds), and then relay RL-1 is closed and relay RL-2 is opened. This causes the pressurized air from inlet 162 to be applied to outlet 165 connected to the turbine air exhaust connector 5 for a few seconds, thereby positively braking the rotation of the turbine, and then terminates the application of the inlet pressure to either outlet, restoring the handpiece to its initial condition.

FIG. 16a and 16b illustrate the operation of the two relays RL-1 and RL-2. As shown in FIG. 16a, when relay RL-2 is closed to reverse the flow of the inlet pressure to the exhaust connector, this continues for about two - three seconds, whereupon the relay automatically opens, thereby disconnecting the inlet pressure at 162 from both of the connectors 4 and 5 in the handpiece tool.

While many of the above-described embodiments incorporate the anti-suction control into the handpiece, it will be appreciated that this control can also be incorporated into an adapter to be attached to a handpiece, as described above in FIG. 17, for example. Also, there could be a plurality of pairs of spray nozzles and valve nozzles, corresponding to nozzles 15a, 16a, FIG. 3, arranged in a line or in a circle, to increase the cooling and also to assure against blockage. Further, the turbine and / or the sleeve (corresponding to elements 6 and 7 in FIG. 3) could be of sintered ceramics, to provide more wear resistance, less friction, and more temperature stability. Many other variations, modifications and applications of the invention will be apparent.

It will be understood that the present invention has been described above purely by way of example, and modifications of detail can be made within the scope of the invention.

Each feature disclosed in the description, and (where appropriate) the claims and drawings may be provided independently or in any appropriate combination.

Any reference numerals appearing in the claims are by way of illustration only and shall have no limiting effect on the scope of the claims.

## Claims

1. A dental handpiece, comprising:
a dental implement at the front end insertable into the mouth of a patient when performing a dental operation therein; and
a fluid line connector at the back end of the handpiece for connection to a fluid supply line supplying pressurized fluid to the dental implement;
characterized in that said handpiece includes fluid control means preventing the flow of fluid from the patient's mouth into the front end of the dental handpiece and / or into the fluid supply line at the back end of the dental handpiece.

2. The dental handpiece according to claim 1, wherein the dental implement at the front end of the handpiece includes a rotatable dental tool driven by a drive within the handpiece coupled to the dental tool via a shaft, and supplied by pressurized fluid via a fluid supply line connected to the back end of the hand piece.

3. The dental handpiece according to claim 2,
wherein said fluid control means includes a seal which is movable away from said drive shaft to produce a passageway permitting free rotation of said shaft when positive fluid pressure is applied to the drive to rotate the drive, but is movable towards said drive shaft upon the termination of said positive pressure to the drive to close said passageway and thereby to block the reverse flow of fluid from the patient's mouth into the handpiece by the rotational inertia of the drive; and/or
wherein said back-end of the handpiece includes a one-way valve permitting flow of pressurized fluid to the drive in the handpiece upon the presence of pressurized fluid in the fluid supply line, but blocking the flow of fluid from the handpiece to the fluid supply line upon the absence of pressurized fluid in the fluid supply line.

4. The dental handpiece according to claim 3, wherein said drive shaft includes a ring fixed thereto for rotation therewith, and said movable seal moves away from said ring when positive pressure is applied to the drive, and into engagement with said ring when the positive pressure is terminated.

5. The dental handpiece according to claim 4,
wherein said movable seal is a sealing ring movable between a collar fixed to the handpiece and the ring fixed to the drive shaft; or
wherein said movable seal is a flat sealing ring having its outer end fixed to a collar and its inner end movable with respect to the ring fixed to the drive shaft.

6. The dental handpiece according to any of claims 4 or 5, wherein said ring fixed to the drive shaft is of ceramic material, and said movable seal is of elastomeric material.

7. The dental handpiece according to claim 2,
wherein said drive shaft includes turbine blades at the exit end of the drive shaft emerging from the front end of the handpiece and coupled to the dental tool so as to be rotated therewith, said turbine blades being oriented to produce a positive pressure directed outwardly through a clearance between the housing and the drive shaft to prevent fluid from the patient's mouth entering the handpiece via said clearance upon the termination of the flow of pressurized fluid to the drive; and/or
wherein the handpiece includes a one-way valve which is normally biased to a closed position to block the flow of fluid for rotating the drive in the absence of pressurized fluid supplied to the drive, but is urged to an open position to permit the flow of fluid for rotating the drive when pressurized fluid is applied to the drive.

8. The dental handpiece according to claim 7,
wherein said one-way valve is in an exhaust line from the drive; and/oror
wherein said one-way valve includes a valve member fixed to a piston and spring-urged to a closed position with respect to the exhaust line from the drive;
said one-way valve including a cylinder in the fluid line to the drive for receiving pressurized fluid when applied to the drive;
said cylinder being movable to open or to close a passageway for conveying the pressurized fluid of a fluid line to the one-way valve in said exhaust line;
said cylinder normally being spring-biased to a closed position to block the flow of the pressurized fluid to said one-way valve, but being actuated, when receiving pressurized fluid from the fluid line, to convey said pressurized fluid via said passageway to the one-way valve; and/or
wherein said one-way valve is incorporated into the back end of the handpiece; and/or
wherein said one-way valve is included in an adapter to be coupled between the back end of the handpiece and the fluid line.

9. The dental handpiece according to any one of claims 2 - 8, wherein said front end of the handpiece further includes an air spray nozzle and a water spray nozzle supplied by pressurized air and water, respectively, via further water and air lines connected at said back end of the handpiece.

10. The dental implement according to claim 9,
wherein said front end of the handpiece further includes a one-way valve for each of said nozzles permitting discharge from the respective nozzle into the patient's mouth, but blocking flow via the respective nozzle from the patient's mouth into the handpiece; and/or
wherein said back-end of the handpiece includes a one-way valve for the water line permitting flow from the water line into the handpiece, but blocking flow from the handpiece into the water line; and/or
wherein said back-end of the handpiece includes a first one-way valve from the water line to the water spray nozzle, and a second one-way valve from the air line to the air spray nozzle;
each one-way valve permitting forward flow to the respective nozzle, but blocking reverse flow from the respective nozzle.

11. The dental handpiece according to claim 10,
wherein said one-way valve comprises:
a stem formed with a longitudinal passageway connectable to the water line, and a radial passageway connectable via the handpiece to the water discharge nozzle; and
a resilient sleeve received over said stem normally blocking fluid flow from the handpiece to the water line, but permitting fluid flow from the water line into the handpiece; or wherein said one-way valve comprises:
a stem formed with a longitudinal passageway connectable to the water line; and
a spring-urged ball normally blocking fluid flow from the handpiece to the water line, but permitting fluid flow from the water line into the handpiece.

12. The dental handpiece according to claim 11, wherein each of said one-way valves includes a band of elastomeric material overlying a bore in the flow path of the respective fluid to the respective nozzle.

13. The dental handpiece according to claim 3, wherein said one-way valve includes a rotatable member in the back-end of the handpiece in a passageway from the drive to the connector to be connected to the fluid supply line;
said rotatable member being formed with a through-going bore, and being rotatable to an open position aligning its bore with said passageway, or to a closed position disaligning its bore with said passageway; and
a piston assembly normally urging said rotatable member to its closed position, but permitting the rotatable member to be rotated by the pressure from said supply line to an open position.

14. The dental handpiece according to claim 13, wherein said piston assembly includes a movable piston coupled to said rotatable member to move it to its open and closed positions; and
a spring normally urging the piston to the closed position of the rotatable member, but being moved by the pressure of the supply fluid to the open position of the rotatable member.

15. The dental handpiece according to claim 14, wherein said piston is coupled to the rotatable member by teeth on the piston stem meshing with teeth on the rotatable member.

16. The dental handpiece according to any one of claims 14-16, wherein said one-way valve simultaneously controls both the supply of pressurized fluid to the drive and the exhaust of the fluid from the drive.

17. The dental handpiece according to any one of claims 14-17,
wherein said rotatable member is of spherical configuration; or
wherein said rotatable member is of disk configuration.

18. The dental handpiece according to claim 10, wherein said back-end of the handpiece includes a common one-way valve for controlling the fluid supply line to the drive, the fluid exhaust line from the drive, the air supply line to the air spray nozzle, and the water supply line to the water spray nozzle.

19. The dental handpiece according to claim 18, wherein said common one-way valve includes a piston normally spring-biased to a closed position, but movable by the pressurized supply fluid to an open position.

20. The dental handpiece according to claim 2,
wherein said handpiece includes a fluid reservoir connected to the drive such that when pressurized fluid is supplied to the drive to drive same, said reservoir is charged with fluid; and when the pressurized fluid supply to the drive is terminated, said reservoir discharges its fluid into the drive to produce braking of the drive; and
wherein said fluid supply line coupled to the handpiece includes a vent to the atmosphere, which vent is closed when pressurized fluid is supplied to the drive in the handpiece for driving same, but is automatically opened upon termination of the supply of pressurized fluid to said drive.

21. The dental handpiece according to claim 20,
wherein said vent is spring-urged to an open position; and/or
wherein said vent is included in a separate adapter unit coupled to the back-end of the handpiece.

22. The dental handpiece according to claim 21, wherein said vent is included in a separate adapter unit coupled to the back-end of the handpiece.

23. The dental handpiece according to claim 2,
wherein the supply of pressurized fluid to said drive is controlled by an electrical control system having an operator which, when operated, causes the fluid in the supply line to flow to the drive in one direction, and when the operator is released, reverses the flow of the fluid with respect to the drive for a short interval, and then terminates the flow of the fluid to the drive.

24. The dental handpiece according to any of claims 2 -24, wherein said drive is an air turbine driven by pressurized air.
